# EUROPEAN PATENT APPLICATION

(11) **EP 3 081 703 A1**
(43) Date of publication of application: **19.10.2016**
(21) Application number: 15163973.9
(22) Date of filing: 17.04.2015
(51) Int. Cl.: E02F 9/12, E02F 3/30

(54) **LUBRICATION SYSTEM FOR SLEWING GEAR DEVICE**

(71) Applicant: Caterpillar Global Mining LLC, Oak Creek, WI 53154 (US)
(72) Inventor: Capraro, Sebastian, 44135 Dortmund (DE)
(74) Representative: Kramer Barske Schmidtchen Patentanwälte PartG mbB

(57) **Abstract**

The present disclosure relates to a slewing gear device (110) for rotating a superstructure (102) of a construction machine (100) relative to an undercarriage (104) of the construction machine (100). The slewing gear device (110) may comprise a ring gearwheel (126), at least one inner gearwheel (132), and a plurality of lubricant dispensing units (136) configured to dispense a lubricant onto inner teeth (130) of the ring gearwheel (126). The lubricant dispensing units (136) may be arranged spaced apart from one another about the central axis (A) in a specific manner, which may ensure proper lubrication of the inner teeth (130) of the ring gearwheel (126) also if operations with limited swing angles only are performed by the construction machine (100).

## Description

### Technical Field

The present disclosure relates to a slewing gear device for rotating a superstructure of a construction machine relative to an undercarriage of the construction machine. The present disclosure is further directed to a related construction machine, particularly a hydraulic mining shovel.

### Background

Construction machines such as excavators may comprise a superstructure (upper carriage) with an operators cab, an undercarriage including a vehicle propulsion system such as track chains, and a boom equipped with an implement, for example a backhoe or face shovel, for digging material and minerals. The superstructure is mounted rotatably to the undercarriage. For example, in surface mining, hydraulic mining shovels (also referred to as large hydraulic excavators) used for digging and extracting material and minerals may include a superstructure with an operators cab mounted rotatably to an undercarriage via a swing gear device or system.

The swing gear device may include a ring gearwheel mounted to the undercarriage, and including inner teeth. Further, an outer ring member is concentrically disposed about the ring gearwheel, and mounted to the superstructure. The outer ring member and the ring gearwheel are connected in a manner that allows a relative rotational movement between both parts. For rotating the superstructure relative to the undercarriage, at least one inner gearwheel meshing with the inner teeth of the ring gearwheel are rotated to rotate the ring gearwheel relative to the outer ring member. For reducing friction between teeth of the inner gearwheel and inner teeth of the ring gearwheel and, thus, extending service life of the slewing gear device, the teeth are lubricated with a lubricant, for example lube or grease.

The present disclosure is directed, at least in part, to improving or overcoming one or more aspects of prior systems.

### Summary of the Disclosure

According to an aspect of the present disclosure, a slewing gear device for rotating a superstructure of a construction machine relative to an undercarriage of the construction machine is disclosed. The disclosed slewing gear device may comprise a ring gearwheel extending circumferentially about a central axis, and including inner teeth facing radially inwardly towards the central axis. The disclosed slewing gear device may further comprise at least one inner gearwheel arranged within the ring gearwheel, and including outer teeth configured to mesh with the inner teeth of the ring gearwheel for rotating the superstructure) relative to the undercarriage. The disclosed slewing gear device may further comprise a plurality of lubricant dispensing units configured to dispense a lubricant onto the inner teeth of the ring gearwheel. The lubricant dispensing units may be arranged spaced apart from one another about the central axis. For each inner gearwheel, the respective inner gearwheel and the nearest lubricant dispensing unit in a first circumferential direction about the central axis may confine a first central angle with respect to the central axis being smaller than 45°. Furhter, for each inner gearwheel, the respective inner gearwheel and the nearest lubricant dispensing unit in a second circumferential direction about the central axis may confine a second central angle with respect to the central axis being smaller than 45°. The second circumferential direction may be oppositely directed to the first circumferential direction.

According to another aspect of the present disclosure, a construction machine is disclosed. The disclosed construction machine may comprise a superstructure, an undercarriage, and a slewing gear device according to the present disclosure. The slewing gear device may rotatably mount the superstructure to the undercarriage. The construction machine may be configured as a hydraulic mining shovel that may include a work implement being a backhoe or a front shovel.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary hydraulic mining shovel;
Fig. 2 shows a drawing of a superstructure rotatably mounted onto an undercarriage of a hydraulic mining shovel;
Fig. 3 shows a drawing of a bottom view of a slewing gear device section;
Fig. 4 shows a schematic drawing of an exemplary slewing gear device; and
Fig. 5 shows a schematic drawing of a slewing gear device with a lubrication circuit.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that although a slewing gear device of a construction machine may enable to rotate the superstructure relative to the undercarriage about 360 degrees, operators may rotate the superstructure about a limited swing angle range only for certain operations. Particularly, typical working operations carried out by operators of a hydraulic mining shovel require a limited swing angle only. The swing angle may be limited because, in operation, a bucket attached to a boom assembly of the hydraulic mining shovel alternates between a digging point for digging material, and a material dropping point for dropping the excavated material from the bucket into an open-box bed (dump) of a transport vehicle such as an off-highway truck. For reasons of efficiency, the hydraulic mining shovel and the transport vehicle may be situated such that the digging point and the material dropping point confine a swing angle of merely 90° or even less. In particular, it was found that in face shovel digging operations, the swing angle may be about 90°, whereas in backhoe digging operations, the swing angle may be about 60° only.

Furthermore the present disclosure is based in part on the realization that the limited swing angle used by the operator during operation may considerably affect the lubrication of gear teeth of the slewing gear device. It was found that although a sufficient amount of lubricant may be present in the slewing gear device, inner teeth of the ring gearwheel may be not or not sufficiently coated with lubricant in some regions of the ring gearwheel. Specifically, it was found that although a lubrication dispensing unit for dispensing a lubricant onto the inner teeth of the ring gearwheel may be present in close vicinity of an inner gearwheel, it may occur that actually no lubricant is provided to those regions of the inner teeth of the ring gearwheel, which mesh with the inner gearwheel. Due to a limited swing angle resulting from the specific operational task of the construction machine, the lubricated regions of the ring gearwheel may move away from the inner gearwheel during a first half of a swing (forward travel) until a first reversal point. Then, during a second half of the swing (return travel), the lubricated regions approach to the inner gearwheel, but do not reach the same as a second reversal point of the limited swing angle is reached to early. Thereafter, forward travel starts again without any lubricant from the lubricant dispensing unit having reached the inner gearwheel.

Additionally, it was realized that in case of a slewing gear device having more than one inner gearwheel, above findings may be respectively considered for all inner gearwheels.

Accordingly, the present disclosure suggests to provide a lubricant dispensing unit at either side of each inner gearwheel in a distance that considers the possibility of limited swing angles during operation. Particularly, the distance is chosen to ensure proper lubrication of the inner teeth of the ring gearwheel also if the construction machine is operate with limited swing angles only such as during front shovel digging operations and backhoe digging operations of a hydraulic mining shovel.

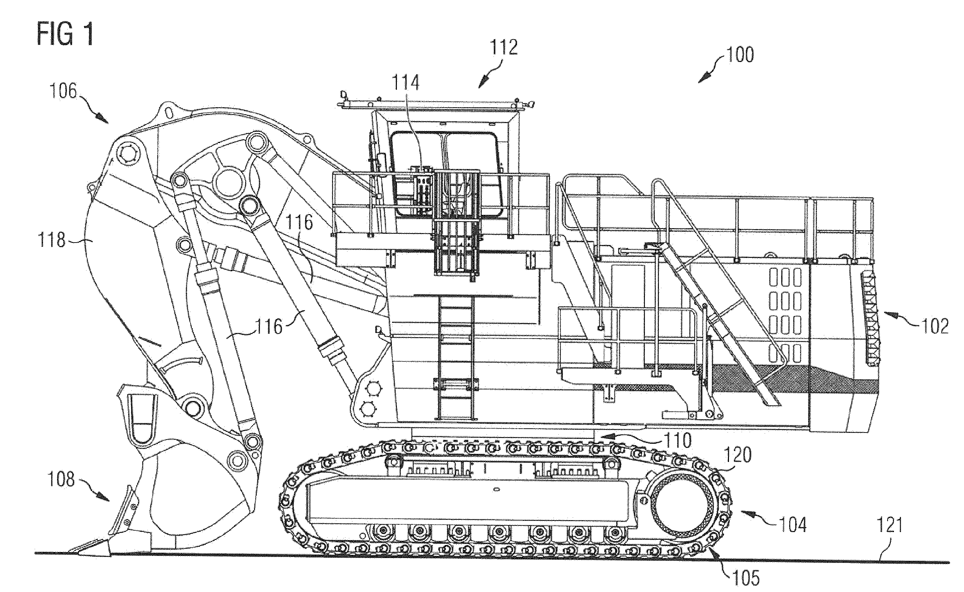

Referring now to the drawings, a construction machine 100 is shown in Fig. 1. Specifically, Fig. 1 depicts a hydraulic mining shovel.

Hydraulic mining shovel 100 comprises a superstructure (upper carriage) 102, an undercarriage 104 with track chains 105, and a boom assembly 106 with an implement 108. A slewing gear device (swing gear device) 110 is mounted to superstructure 102 and undercarriage 104 to enable a relative rotary movement to occur between superstructure and undercarriage 102, 104.

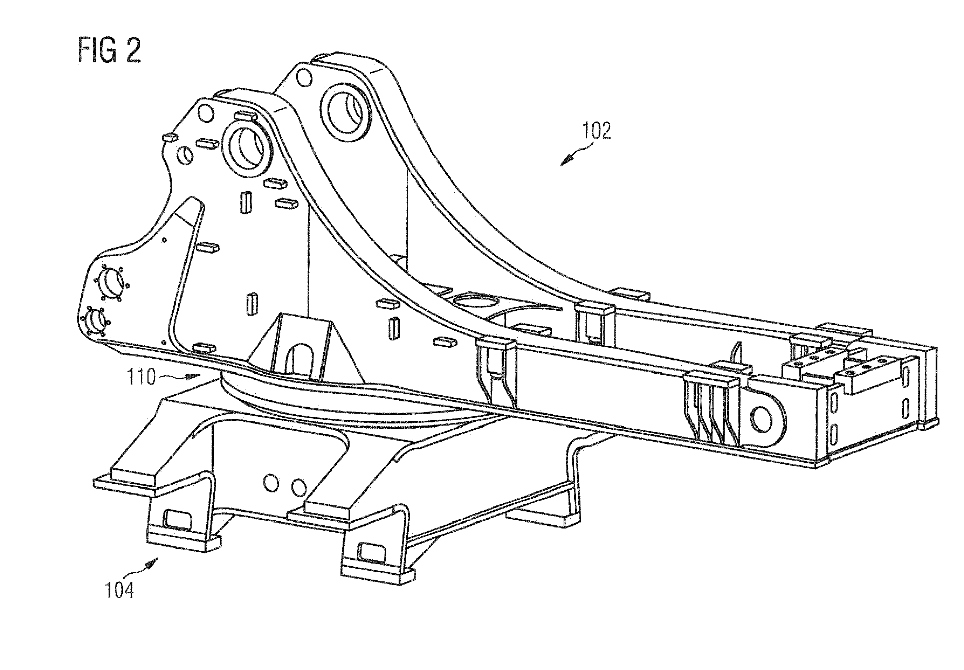

Superstructure 102 and undercarriage 104 may include and accommodate a plurality of components as is described in the following under reference to Fig. 1. An exemplary frame construction of superstructure 102 and undercarriage 104 is shown in Fig. 2.

Referring back to Fig. 1, an operator station or cab 112 at superstructure 102 may provide a control panel for an operator to control hydraulic mining shovel 100 as desired. For example, the control panel may include joysticks, levers, buttons, and the like for propelling hydraulic mining shovel, and controlling operation of implement 108, boom assembly 106, and slewing gear device 110. In some embodiments, operator cab 112 further includes interfaces such as a display for conveying information such as machine parameters and environmental conditions to an operator.

Additionally or alternatively, a remote control and/or interface unit for the operator may be provided outside of cab 112, for example remote from hydraulic mining shovel 100.

Superstructure 102 may further accommodate at least on internal combustion engine, for example a diesel engine, a hydraulic system, and a cooling system. The hydraulic system may provide at least one pressurized hydraulic fluid source for all kinds of hydraulically actuated components of the hydraulic mining shovel, for example rotational or linear hydraulic motors. Furthermore, the cooling system may have an oil cooling system and radiator fans for cooling hydraulic components and the internal combustion engine(s) of hydraulic mining shovel 100. As one skilled in the art will appreciate, hydraulic mining shovel 100 may include further components and systems required for operation, for example a control systems.

Boom assembly 106 may include a plurality of hydraulic actuators 116 for operating a boom 118 and a work implement 108, which is movably mounted to a front end of boom 118. In the shown embodiment, implement 108 is configured as a face shovel. Other embodiments may include other configurations of implement 108 such as a backhoe.

Furthermore, undercarriage 104 includes a propulsion device for propelling hydraulic mining shovel 100 on a work surface 121. For example, the propulsion device may include track chains 120 and drive motors for driving track chains 120.

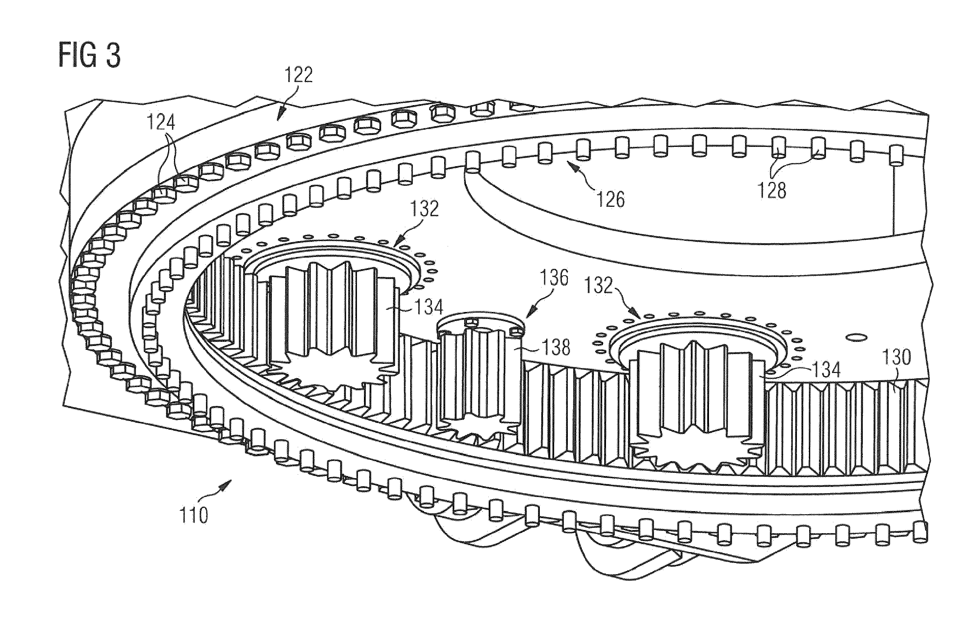

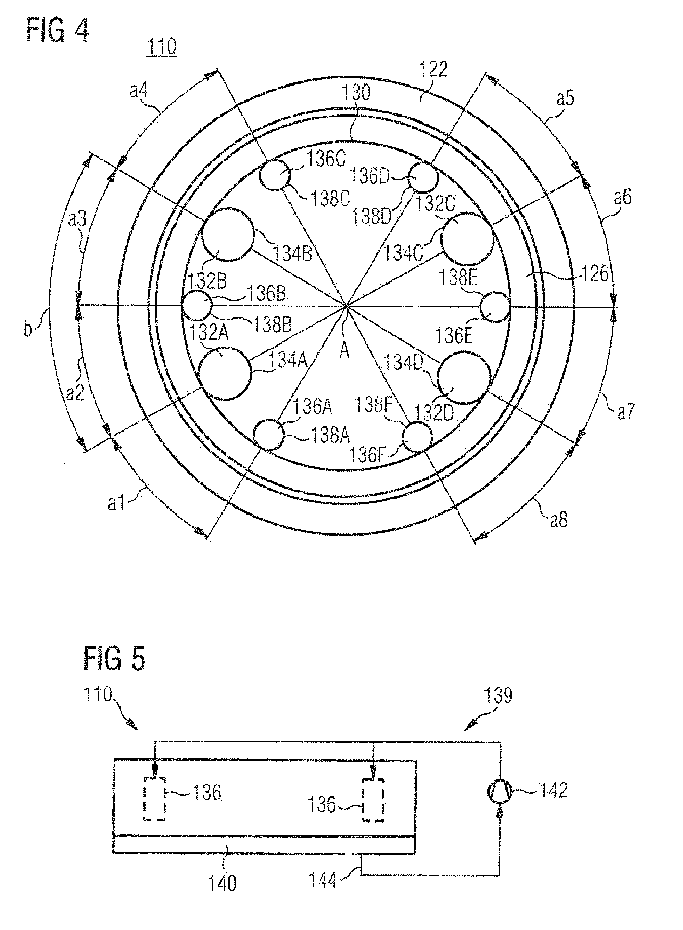

Referring now to Figs. 3 and 4 for describing slewing gear device 110 in more detail. It is noted that for purpose of clarity, in Fig. 3, two inner gearwheels and one lubricating pinion is shown only. Further, Fig. 4 particularly aims to schematically depict a relative arrangement of components of an exemplary slewing gear device 110.

Slewing gear device 110 includes an outer ring member 122, ring gearwheel 126, at least one inner gearwheel 132 and lubricant dispensing units 136.

As can be seen in Fig. 4, ring gearwheel 126 and outer ring member 122 extend circumferentially about a central axis A. Further, outer ring member 122 is concentrically arranged with respect to ring gearwheel 126, and ring gearwheel 126 includes inner teeth 130 facing radially inwardly towards central axis A for meshing with outer teeth 134 of inner gearwheel(s) 132 (see Fig. 3).

Outer ring member 122 is mounted via fastening means, for example bolts 124, to superstructure 102 (see Figs. 1 and 2). Likewise, ring gearwheel 126 is mounted via fastening means, for example bolts 128, to undercarriage 104 (see Figs. 1 and 2).

To allow a relative rotary movement between superstructure 102 and undercarriage 104, outer ring member 122 and ring gearwheel 126 are connected in a manner that allows a relative rotary movement. For example, ring gearwheel 126 is turnably mounted in outer ring member 122 by roller bearings accommodated in outer ring member 122. For instance, cylindrical roller bearings may be used as roller bearings.

The relative rotary movement is generated by rotating the at least one inner gearwheel 132, which is arranged within ring gearwheel 126. When rotating inner gearwheel(s) 132, outer teeth 134 of inner gearwheel(s) 132 mesh with inner teeth 130 of ring gearwheel 126 such that outer ring member 122 and inner gearwheel(s) 132 together move on a circular path about central axis A. As a result, superstructure 102, which is connected to outer ring member 122, is rotated relative to undercarriage 104, which is connected to ring gearwheel 126.

For driving inner gearwheel(s) 132, swing drives and transmissions (not shown) may be operably connected to inner gearwheels 132. Said transmissions and swing drives may be accommodated in superstructure 102. For example, the transmission may be configured as compact planetary transmissions and the swing drives may be configured as piston motors.

In some embodiments, one inner gearwheel 132 may be provided only. Alternatively, a plurality of gearwheels 132 may be arranged within ring gearwheel 126. Particularly, large hydraulic mining shovels such as the one shown in Fig. 1 may include more than one inner gearwheel 132.

For example, in case more than one inner gearwheel 132 may be provided, inner gearwheels 132 may be arranged in pairs of two as depicted in Fig. 4. Here, a first pair of inner gearwheels 132A and 132B confine a central angle b with respect to central axis A of about 60° similar to inner gearwheels 132C and 132D forming a second pair. Other embodiments may include more or less pairs of inner gearwheels 132, other values for central angle b, for example within a range between 10° and 90°, and/or in a symmetric or asymmetric arrangement about central axis A.

Furthermore, slewing gear device 110 includes a plurality of lubricant dispensing units 136 that are arranged spaced apart from one another about central axis A. For lubricating inner teeth 130 of ring gearwheel 126, lubricant is supplied to lubricant dispensing units (lubricant injecting/ejecting units) 136, which dispense lubricant onto inner teeth 130 in a continuous and/or intermittent fashion. For example, lubricant dispensing units 136 may be configured as lubricating pinions as shown in Fig. 3. Those lubricating pinions may include outer teeth 138 for meshing with inner teeth 130 of ring gearwheel 126. Outer teeth 138 may include a plurality of openings through which lubricant is dispensed from an inner hollow chamber or channel system of the lubricating pinion. Said inner hollow chamber or channel system is supplied with lubricant from a lubricant pump or the like. Alternatively or additionally, at least one lubricant dispensing unit 136 may be configured as lubricant spray units arranged in a suitable distance to inner teeth 130 for spraying lubricant onto the same. Again, said lubricant spray units may be supplied with lubricant from a lubricant pump or the like.

Furthermore, as can be seen in Fig. 4, on either side of each inner gearwheel 132A - 132D, one of lubricant dispensing units 136 is arranged in a close vicinity.

For example, taking a closer look to first inner gearwheel 132A. In a first circumferential direction about central axis A, first lubrication dispensing unit 136A is the nearest lubricating dispensing unit for first inner gearwheel 132A. Specifically, first inner gearwheel 132A and first lubrication dispensing unit 136A are arranged such that a first central angle a1 with respect to central axis A is about 30°. Said first angle a1 is confined between first inner gearwheel 132A and first lubrication dispensing unit 136A. Additionally, in a second circumferential direction about central axis A and opposite the first circumferential direction, a second lubrication dispensing unit 136B is the lubricating dispensing unit nearest to first inner gearwheel 132A. Again, a second central angle a2 with respect to central axis A and confined between first inner gearwheel 132A and second lubricating dispensing unit 136B is about 30°. As can be seen in Fig. 4, similar central angles a2 to a8 are provided for remaining gearwheels 132B to 132D and respective lubricating dispensing units 136B to 136F.

It is noted that angle values for central angles a confined between inner gearwheels 132 and nearest lubricating dispensing unit 136 for each circumferential direction are selected to ensure lubrication of inner teeth 130 in regions meshing with outer teeth 134 of inner gearwheels 132 for both swing directions and limited swing angles.

In some embodiments, each central angle confined between each gearwheel and its nearest lubricating dispensing units for both circumferential directions may be smaller than 45°. With particular reference to a hydraulic mining shovel and its backhoe and front shovel digging operations as noted above, it was found that those central angles are preferably within a range between 5° and 35°, particularly 10° to 30°, because swing angles within a limited range of 60° to 90° may frequently occur during those operations only.

For reducing a number of lubrication dispensing units, in the shown embodiment of Fig. 4, a lubricant dispensing unit 136B is disposed between inner gearwheels 132A and 132B of the first pair of inner gearwheels, and another lubricant dispensing unit 136E is disposed between inner gearwheels 132C and 132D of the second pair of inner gearwheels. As a result, both gearwheels 132A and 132B have the same nearest lubrication dispensing unit 136B for different circumferential directions about central axis A. Similarly, both gearwheels 132C and 132D share lubrication dispensing unit 136E as nearest lubrication dispensing unit for different circumferential directions about central axis A. Alternatively, for example, no lubricant dispensing unit may be provided between inner gearwheels of a pair of inner gearwheels. The two inner gearwheels of that pair may be arranged so closely to one another that both gearwheels have the same nearest lubrication dispensing units for both circumferential directions.

In some embodiments such as the one shown in Fig. 4, lubrication dispensing units 136 may be symmetrically arranged about central axis A. Since six lubrication dispensing units 136A - 136F are provided, neighboring lubrication dispensing units are spaced apart from one another about central angles of 60°. As a result, a full lubrication of inner teeth 130 about an entire circumference of ring gearwheel 126 is achieved as soon as a swing angle of 60° is performed by slewing gear device 110. Other embodiments may include more or less lubrication dispensing units 136 in symmetrical and asymmetrical arrangements about central axis A.

Referring to Fig. 5, slewing gear device 110 may be equipped with a lubricant circuit 139 that circulates a lubricant through its components.

Lubricant circuit 139 includes a lubricant pump 142 for pumping and supplying a lubricant to lubricant dispensing units 136. Specifically, lubricant pump 142 is fluidly connected via lubricant lines to each lubricant dispensing unit 136. Furthermore, circuit 139 may comprise a lubricant drain 144 for draining lubricant from a lubricant sump 140 of slewing gear device 110 and providing the drained lubricant to lubricant pump 142. Lubricant sump 140 may be arranged to collect lubricant that does not (longer) coat any gearing of slewing gear device 110.

### Industrial Applicability

The slewing gear device as exemplary disclosed herein is applicable to construction machines for rotatably mounting a superstructure relative to an undercarriage.

In particular, the slewing gear is applicable to hydraulic mining shovels including a backhoe or a front shovel as working implement, because it was realized that particularly those implements are associated with operations including limited swing angles between 60° and 90° only.

By providing one lubrication dispensing unit 136 at either side of each inner gearwheel 132 in a distance confining a central angle of less than 45° with respect to central axis A, it may be ensured that lubricant is provided to meshing regions of outer teeth 134 of inner gearwheels 132 and inner teeth 130 of ring gearwheel 126 although swing angles performed by slewing gear device 110 may be about 90° only. In case central angles of less than 30° are provided between inner gearwheel(s) 132 and nearest lubrication dispensing units 136, proper lubrication may be ensured even for swing angles of slewing gear device 110 being less than 60° etc.

Although the preferred embodiments of this invention have been described herein, improvements and modifications may be incorporated without departing from the scope of the following claims.

## Claims

1. A slewing gear device (110) for rotating a superstructure (102) of a construction machine (100) relative to an undercarriage (104) of the construction machine (100), the slewing gear device (110) comprising:
a ring gearwheel (126) extending circumferentially about a central axis (A), and including inner teeth (130) facing radially inwardly towards the central axis (A);
at least one inner gearwheel (132) arranged within the ring gearwheel (126), and including outer teeth (134) configured to mesh with the inner teeth (130) of the ring gearwheel (126) for rotating the superstructure (102) relative to the undercarriage (104); and
a plurality of lubricant dispensing units (136) configured to dispense a lubricant onto the inner teeth (130) of the ring gearwheel (126), the lubricant dispensing units (136) being arranged spaced apart from one another about the central axis (A),
wherein for each inner gearwheel (132):
the respective inner gearwheel (132) and the nearest lubricant dispensing unit (136) in a first circumferential direction about the central axis (A) confine a first central angle (a1) with respect to the central axis (A) being smaller than 45°; and
the respective inner gearwheel (132) and the nearest lubricant dispensing unit (136) in a second circumferential direction about the central axis (A) confine a second central angle (a2) with respect to the central axis (A) being smaller than 45°, the second circumferential direction being oppositely directed to the first circumferential direction.

2. The slewing gear device (110) of claim 1, wherein the first central angle (a1) and the second central angle (a2) are within a range between 5° and 35°, preferably between 10° and 30°.

3. The slewing gear device (110) of claim 1 or 2, wherein at least one of the lubricant dispensing units (136) is configured as:
lubricating pinion configured to mesh with the inner teeth (130) of the ring gearwheel (126) and dispense lubricant onto the inner teeth (130); and/or
lubrication spray system configured to spray lubricant onto the inner teeth (130) of the ring gearwheel (126).

4. The slewing gear device (110) of any one of the preceding claims, wherein the at least one inner gearwheel (132) includes a first pair of inner gearwheels formed by two inner gearwheels confining a central angle (b) with respect to the central axis (A) within a range between 10° and 90°.

5. The slewing gear device (110) of any one of the preceding claims, wherein the at least one inner gearwheel (132) includes a plurality of pairs of inner gearwheels (132), each pair of inner gearwheels (132) being formed by two neighboring inner gearwheels confining a central angle (b) with respect to the central axis (A) within a range between 10° and 90°, and the pairs of the inner gearwheels (132) are preferably symmetrically arranged about the central axis (A).

6. The slewing gear device (110) of claim 4 or 5, wherein none or one of the plurality of lubricant dispensing units (136) is arranged between the two inner gearwheels of the respective pair of inner gearwheels (132).

7. The slewing gear device (110) of any one of the preceding claims, wherein the lubricant dispensing units (136) are arranged symmetrically about the central axis (A).

8. The slewing gear device (110) of any one of the preceding claims, wherein:
the plurality of lubricant dispensing units (136) includes in total six lubricant dispensing; and/or
the plurality of inner gearwheels (132) includes in total four inner gearwheels.

9. The slewing gear device (110) of any one of the preceding claims, further comprising a lubricant pump (142) fluidly connected to each of the lubricant dispensing units (136) for pumping lubricant to the lubricant dispensing units (136).

10. The slewing gear device (110) of claim 9, further comprising a lubricant circuit (139) configured to circulate a lubricant, the lubricant circuit (139) including:
the lubricant pump (142);
the lubricant dispensing units (136); and
a lubricant drain (144) for draining lubricant from a lubricant sump (140) of the slewing gear device (110) and providing the lubricant to the lubricant pump (142).

11. The slewing gear device (110) of any one of the preceding claims, further comprising an outer ring member (122) concentrically arranged about the central axis (A) and the ring gearwheel (126), wherein the outer ring member (122) and the ring gearwheel (126) are configured to enable a relative movement between the outer ring member (122) and the ring gearwheel (126) about the central axis (A).

12. A construction machine (100), comprising:
a superstructure (102);
an undercarriage (104); and
a slewing gear device (110) according to any one of the preceding claims, the slewing gear device (110) rotatably mounting the superstructure (102) to the undercarriage (104).

13. The construction machine (100) of claim 12, wherein an outer ring member (122) of the slewing gear device (102) is fastened to the superstructure (102), the ring gearwheel (126) of the slewing gear device (110) is fastened to the undercarriage (104), and the outer ring member (122) and the ring gearwheel (126) are rotatably mounted to one another.

14. The construction machine (100) of claim 12 or 13, wherein the construction machine is configured as hydraulic mining shovel.

15. The construction machine (100) of claim 14, wherein the hydraulic mining shovel includes a work implement (108) being a backhoe or a front shovel.
